# EUROPEAN PATENT APPLICATION

(11) **EP 4 607 686 A1**
(43) Date of publication of application: **27.08.2025**
(21) Application number: 23936351.8
(22) Date of filing: 25.09.2023
(51) Int. Cl.: H01M 50/552, H01M 50/533, H01M 50/528, H01M 50/566, H01M 50/188

(54) **BATTERY CELL, BATTERY AND ELECTRIC DEVICE**

(30) Priority: 11.05.2023 CN 202321132714 U
(71) Applicant: Contemporary Amperex Technology Co., Limited, Ningde, Fujian 352100 (CN)
(72) Inventor: LIN, Denghua, Ningde, Fujian 352100 (CN); HUANG, Shoujun, Ningde, Fujian 352100 (CN); WU, Yu, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Laufhütte, Dieter
(86) International application number: PCT/CN2023/121164
(87) International publication number: WO 2024/230045

(57) **Abstract**

A battery cell, a battery and an electric device, which belong to the technical field of batteries. The battery cell comprises a casing assembly and a battery cell assembly, wherein the casing assembly comprises a casing and a first electrode post; the casing is provided with a mounting hole, through which the first electrode post passes; the battery cell assembly comprises an active-substance coated portion and an electrically conductive portion; the active-substance coated portion is provided in the casing, the electrically conductive portion is electrically connected to the active-substance coated portion and the first electrode post; the first electrode post comprises a first electrode-post portion and a second electrode-post portion, which are formed in a split manner; at least part of the first electrode-post portion is stopped outside the casing; and at least part of the second electrode-post portion is stopped inside the casing, and the second electrode-post portion is connected to the electrically conductive portion.

## Description

### CROSS-REFERENCE TO RELATED APPLICATION

The present application is presented based on and claims priority to Chinese Patent Application No. 202321132714.9 filed on May 11, 2023, which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, batteries, as the power source of electric vehicles, play an irreplaceable and important role. Generally, a battery includes a plurality of battery cells, and each of the battery cells includes a housing and a battery cell assembly received in the housing. A post terminal that is electrically connected to the battery cell assembly is riveted to the housing, and the post terminal is electrically connected to a busbar component outside the housing, so as to realize the electrical connection among the plurality of battery cells. However, the application of such a post terminal is limited.

### SUMMARY

Embodiments of the present application provide a battery cell, a battery, and an electric device, which are conducive to improving the design diversity of a first post terminal and enriching the application scenarios of the first post terminal, thereby improving the design diversity of the battery cell.

In a first aspect, the embodiments of the present application provide a battery cell. The battery cell includes: a housing assembly and a battery cell assembly, where the housing assembly includes a housing and a first post terminal, the housing is provided with a mounting hole, and the first post terminal is provided in the mounting hole in a penetrating manner, the battery cell assembly includes an active substance-coated part and a conductive part, the active substance-coated part is disposed in the housing, the conductive part electrically connects the active substance-coated part and the first post terminal; the first post terminal includes a first post terminal part and a second post terminal part that are separately formed and connected to each other, at least a part of the first post terminal part is stopped outside the housing, at least a part of the second post terminal part is stopped inside the housing, and the second post terminal part is connected to the conductive part.

In the above technical solution, the first post terminal is arranged to include the first post terminal part and the second post terminal part that are separately formed, at least a part of the first post terminal part is stopped outside the housing, at least a part of the second post terminal part is stopped inside the housing, and the second post terminal part is connected to the conductive part, such that the structural forms and materials of the first post terminal part and the second post terminal part can be separately designed and selected, which is conducive to improving the design diversity of the first post terminal and enriching the application scenarios of the first post terminal. Specifically, the structural form and the material of the second post terminal part can be provided to provide convenience for connection to the conductive part, and the structural form and the material of the first post terminal part can be provided to be suitable for direct or indirect connection to the busbar component, such that the first post terminal can well meet the requirements of good connection to both the conductive part and the busbar component, thereby achieving a flexible design and expanded application scenarios of the first post terminal, which is conducive to improving the design diversity of the battery cell.

In some embodiments, the second post terminal part includes a first connecting part, the first post terminal has a cavity formed on a side of the first connecting part distal to and/or facing the active substance-coated part, at least a part of the conductive part is received in the cavity and connected to the first connecting part, and at least the first connecting part in the second post terminal part has a hardness greater than that of the first post terminal part.

In the above technical solution, since the first connecting part and the cavity are liable to deformation due to the difficulty in obtaining reliable support from the housing, the hardness of at least the first connecting part in the second post terminal part is set to be greater than that of the first post terminal part in the present application, such that the deformation of the first connecting part can be reduced to a certain extent, the connection reliability between the first connecting part and the conductive part can be improved, and the conductive yield can be improved. Besides, the first post terminal part of relatively low hardness is conducive to improving the yield of the electrical connection between the first post terminal part and the busbar component. In addition, at least a part of the conductive part is arranged to be accommodated in the cavity, such that at least the part of the conductive part can occupy the space inside the first post terminal, the space occupied by the conductive part in the housing can be reduced, and some space can be saved in the housing for accommodating the active substance-coated part of a larger size, thereby improving the volumetric energy density of the battery cell.

In some embodiments, the second post terminal part further includes a second connecting part provided in the mounting hole in a penetrating manner, the second connecting part is formed in an annular structure disposed around an inner wall of the mounting hole, the first connecting part is disposed in an annular region of the second connecting part and connected to an inner end part of the second connecting part proximal to the active substance-coated part, the second connecting part and the first connecting part jointly define the cavity in an enclosing manner, the cavity is open in a direction away from the active substance-coated part, a perforation that is in communication with the cavity is formed on the first connecting part, and the conductive part partially passes through the perforation and is received in the cavity.

In the above technical solution, the second post terminal part includes the second connecting part provided in the mounting hole in a penetrating manner, which facilitates the assembly of the second post terminal part and the housing. Besides, the second connecting part of the annular structure and the first connecting part connected to the inner end part of the second connecting part jointly define the cavity, such that the structure of the second post terminal part can be simplified, and the receiving volume of the cavity can be increased. Moreover, since the cavity is open in the direction away from the active substance-coated part, the conductive part partially extends into the cavity through the perforation on the first connecting part, which is conducive to connecting the conductive part to the first connecting part from the outside of the housing, and facilitates the manufacture of the battery cell.

In some embodiments, the perforation is formed at an edge position of the first connecting part that is connected to the second connecting part.

In the above technical solution, since the perforation is formed at a position of the first connecting part proximal to the second connecting part, when at least a part of the conductive part extending into the cavity is connected to the first connecting part, the first connecting part can have a larger area to be connected to the conductive part, which is conducive to increasing the connection area between the conductive part and the first connecting part, thereby increasing the connection reliability and the conductive area between the conductive part and the first connecting part.

In some embodiments, the active substance-coated part includes a current collector and an active substance layer disposed on the current collector, the conductive part includes a tab part electrically connected to the current collector, the tab part includes a plurality of tab plates, parts of the plurality of tab plates proximal to the current collector converge to form a first gathering part, parts of the plurality of tab plates distal to the current collector converge and are connected to form a second gathering part, and the first gathering part connects the second gathering part and the active substance-coated part; and the conductive part is formed by the tab part, at least a part of the second gathering part passes through the perforation and is received in the cavity; or the conductive part includes the tab part and an adapting piece, at least a part of the adapting piece passes through the perforation and is received in the cavity, and the adapting piece is connected between the second gathering part and the first connecting part.

In the above technical solution, when the conductive part is formed by the tab part, the tab part includes the second gathering part formed by converging and connecting the plurality of tab plates, such that at least a part of the second gathering part can pass through the perforation and be received in the cavity, and the conductive part can be simplified in construction and processing. When the conductive part includes the tab part and the adapting piece, the adapting piece passes through the perforation, such that the operation is convenient. Besides, by using the adapting piece to achieve an indirect electrical connection between the second gathering part and the first connecting part, the adapting piece can be connected to the first connecting part at a part avoiding the second gathering part, such that the welding between the adapting piece and the first connecting part is firm, welding cracks are unlikely to occur, and the reliability and stability of the battery cell can be further improved.

In some embodiments, the first post terminal part is located outside the housing and is an annular structure, the second post terminal part includes a second connecting part provided in the mounting hole in a penetrating manner, the second connecting part is formed in an annular structure disposed around the inner wall of the mounting hole, and an end of the second connecting part distal to the active substance-coated part extends to be connected to an inner peripheral part of the first post terminal part.

In the above technical solution, the first post terminal part is located outside the housing and is an annular structure, and the second connecting part is formed in an annular structure disposed around the inner wall of the mounting hole and an outer end part of the second connecting part can extend to the inner peripheral part of the first post terminal part, such that the construction of the first post terminal can be simplified, the number of parts can be reduced, and the processing and production efficiency can be improved. Besides, since both the first post terminal part and the second connecting part are annular structures, the first post terminal part and the second connecting part can be connected from the outside of the housing and at the inner periphery of the first post terminal part, thereby reducing the difficulty of processing.

In some embodiments, an end part of the second connecting part distal to the active substance-coated part is the outer end part, the outer end part extends to a side of the inner peripheral part proximal to a central axis of the mounting hole, and an inner side surface of the inner peripheral part facing the central axis of the mounting hole is welded to an outer side surface of the outer end part distal to the central axis of the mounting hole.

In the above technical solution, a weld seam between the inner side surface of the inner peripheral part and the outer side surface of the outer end part can be located at an outer surface of the first post terminal distal to the active substance-coated part, thereby facilitating welding from the outside of the housing, reducing the difficulty of welding, and improving the welding yield.

In some embodiments, the housing assembly further includes a post terminal cover plate located outside the housing and lidding the first post terminal part, a clearance groove is formed on the post terminal cover plate, and the clearance groove corresponds to a welding position of the outer end part and the inner peripheral part for accommodating a weld mark.

In the above technical solution, since the weld mark formed by welding the outer end part and the inner peripheral part can be at least partially accommodated in the clearance groove, the interference between the weld mark and the post terminal cover plate can be mitigated, such that the post terminal cover plate can be assembled smoothly with the first post terminal part after the outer end part is welded to the inner peripheral part, thereby improving the compactness and the reliability of the connection between the post terminal cover plate and the first post terminal part.

In some embodiments, the post terminal cover plate includes an embedded part extending to the annular region of the second connecting part, and an outer peripheral surface of the embedded part is spaced apart from an inner side surface of the outer end part to form a first gap.

In the above technical solution, by providing the first gap between the outer peripheral surface of the embedded part and the outer end part, the problem that the post terminal cover plate cannot be mounted to the first post terminal part due to the reduced annular size of the second connecting part due to the welding of the inner peripheral part of the first post terminal part and the outer end part of the second post terminal part can be mitigated, such that the post terminal cover plate can be mounted smoothly after the welding of the outer end part and the inner peripheral part.

In some embodiments, an end part of the second connecting part distal to the active substance-coated part is an outer end part, the inner peripheral part abuts against a side of the outer end part distal to the active substance-coated part, and an inner end surface of the inner peripheral part facing the active substance-coated part is welded to an outer end surface of the outer end part distal to the active substance-coated part.

In the above technical solution, the weld seam between the inner end surface of the inner peripheral part and the outer end surface of the outer end part can be located in the annular region of the first post terminal part and the annular region of the second connecting part. That is, the welding head can extend into the annular region of the first post terminal part and the annular region of the second connecting part for welding. The flatness of the outer surface of the first post terminal distal to the active substance-coated part is slightly affected by the weld mark formed after welding, which is conducive to the subsequent welding of the first post terminal and the post terminal cover plate or the busbar component.

In some embodiments, the housing assembly further includes a post terminal cover plate located outside the housing and lidding the first post terminal part, the post terminal cover plate is partially embedded in an annular region of the inner peripheral part, and the post terminal cover plate is spaced apart from the inner peripheral part to form a second gap.

In the above technical solution, by providing the second gap between the post terminal cover plate and the inner peripheral part, the post terminal cover plate can be mounted smoothly after the first post terminal part is welded to the second post terminal part, thereby improving the compactness and the reliability of the connection between the post terminal cover plate and the first post terminal part.

In some embodiments, the first post terminal part is connected to the second post terminal part by welding.

In the above technical solution, by connecting the first post terminal part to the second post terminal part by welding, the construction of the first post terminal can be simplified, and the first post terminal can be easily mounted to the housing, which is conducive to reducing the production cost and improving the assembly efficiency.

In some embodiments, the first post terminal is provided with a recess at a welding position of the first post terminal part and the second post terminal part, and the recess is configured to accommodate a weld mark formed by welding the first post terminal part and the second post terminal part.

In the above technical solution, the recess is disposed on the first post terminal corresponding to the welding position of the first post terminal part and the second post terminal part to accommodate the weld mark, such that the problem that the weld mark protrudes from the surface of the welding position, which may affect the subsequent assembly of other parts, such as the post terminal cover plate, with the first post terminal, can be mitigated.

In some embodiments, the housing assembly further includes an insulating seal assembly, the insulating seal assembly connects the housing and the first post terminal in an insulating manner, the insulating seal assembly includes an insulating member and an insulating sealing member with stronger heat resistance than the insulating member, and the insulating sealing member is located between the welding position of the first post terminal part and the second post terminal part and the housing.

In the above technical solution, the insulating seal assembly is arranged to include the insulating sealing member with sealing performance and relatively strong heat resistance, the insulating sealing member is disposed between the welding position of the first post terminal part and the second post terminal part and the housing, and the insulating member is disposed distal to the welding position of the first post terminal part and the second post terminal part relative to the insulating sealing member, such that the influence of the welding temperature on the insulating member can be reduced by utilizing the insulating sealing member. Besides, the cost of the insulating seal assembly is reduced while the insulating sealing effect is ensured by arranging the insulating seal assembly to include the insulating member with relatively weak heat resistance.

In some embodiments, the welding position of the first post terminal part and the second post terminal part is located at an outer side of the mounting hole, the insulating member includes an outer insulating member and an inner insulating member, the outer insulating member is sandwiched between the first post terminal part and an outer wall of the housing, the inner insulating member is sandwiched between the second post terminal part and an inner wall of the housing, the insulating sealing member includes an inner segment and an outer segment, the inner segment extends inside the mounting hole and abuts against the first post terminal part and the inner insulating member separately at two ends in an axial direction of the mounting hole, and the outer segment extends at the outer side of the mounting hole and is connected to the inner segment at a radial inner end and abuts against the outer insulating member at a radial outer end in a radial direction of the mounting hole.

In the above technical solution, the assembly of the insulating seal assembly is convenient, and due to the structural distribution position of the insulating sealing member, both the inner insulating member and the outer insulating member can well obtain heat insulation protection of the sealing insulating member.

In some embodiments, the housing is provided with a plurality of post terminals, and at least one of the plurality of post terminals is the first post terminal.

In the above technical solution, at least one of all the post terminals of the housing assembly is arranged to be the first post terminal, such that a part of all the post terminals in the battery cell may be the separately formed first post terminals, or all the post terminals may be the separately formed first post terminals, which allows to flexibly select and match the post terminals according to manufacturing requirements, cost requirements, and the like.

In a second aspect, the embodiments of the present application further provide a battery. The battery includes the above battery cell.

In the above technical solution, the design of the battery cell is diversified, such that the diversity of battery design can be improved.

In a third aspect, the embodiments of the present application further provide an electric device. The electric device includes the above battery.

In the above technical solution, the battery can have diversified designs, such that different batteries can be flexibly designed according to the actual requirements of the electric device, and the power supply requirements for the electric device can be optimized.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle as an electric device according to some embodiments of the present application;
FIG. 2 is an exploded view of a battery cell used in a battery according to some embodiments of the present application;
FIG. 3 is a three-dimensional view of a battery cell according to some embodiments of the present application;
FIG. 4 is an exploded view of the battery cell shown in FIG. 3;
FIG. 5 is an orthographic projection view of the battery cell shown in FIG. 3;
FIG. 6 is a cross-sectional view along the line A-A in FIG. 5;
FIG. 7 is a partially enlarged view of the portion B shown in FIG. 6;
FIG. 8 is a partial cross-sectional view of a battery cell according to some embodiments of the present application;
FIG. 9 is a partial cross-sectional view of a battery cell according to some embodiments of the present application;
FIG. 10 is a partial cross-sectional view of a battery cell according to some embodiments of the present application;
FIG. 11 is a three-dimensional view of a first post terminal according to some embodiments of the present application;
FIG. 12 is an orthographic projection view of the battery cell shown in FIG. 11;
FIG. 13 is a cross-sectional view along the line C-C in FIG. 12;
FIG. 14 is a cross-sectional view along the line D-D in FIG. 12;
FIG. 15 is a partial cross-sectional view of a battery cell according to some embodiments of the present application; and
FIG. 16 is a partial cross-sectional view of a battery cell according to some embodiments of the present application.

Reference numerals are as follows: electric device 1000; battery 100; controller 200; motor 300; case 20; first case 201; second case 202; battery cell 10; housing assembly 1; housing 11; mounting hole 111; housing body 112; bottom cover 113; first post terminal 12; first post terminal part 121; first stopper part 1211; inner peripheral part 12111; inner end surface of the inner peripheral part S11; inner side surface of the inner peripheral part S12; outer peripheral part 12112; extending part 1212; second post terminal part 122; second stopper part 1221; first connecting part 1222; perforation 12221; second connecting part 1224; outer end part 12241; outer end surface of the outer end part S21; outer side surface of the outer end part S22; inner side surface of the outer end part S23; cavity 123; recess 124; groove 125; post terminal cover plate 13; clearance groove 131; embedded part 132; outer peripheral surface of the embedded part 1321; first gap 14; second gap 15; insulating seal assembly 16; insulating member 161; outer insulating member 1611; inner insulating member 1612; insulating sealing member 162; outer segment of the insulating sealing member 1621; inner segment of the insulating sealing member 1622; insulating film 17; battery cell assembly 2; active substance-coated part 21; current collector 211; active substance layer 212; conductive part 22; tab part 221; tab plate 2210; first gathering part 2211; second gathering part 2212; adapting piece 222; first direction Z; second direction X; and third direction Y.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to more than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and pouch battery cells, which are not limited in the embodiments of the present application.

Illustratively, a battery cell may generally include a housing, a battery cell assembly, and an electrolytic solution. The housing is configured to accommodate the battery cell assembly and the electrolytic solution. The housing is provided with a plurality of post terminals, which generally include at least one positive electrode post terminal and at least one negative electrode post terminal. The battery cell assembly includes one or a plurality of electrode assemblies, and the electrode assembly is formed by stacking or winding a positive electrode plate, a negative electrode plate, and a separator.

The positive electrode plate may generally include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of positive electrode tab plates are stacked together and electrically connected to the positive electrode post terminal. Illustratively, the plurality of positive electrode tab plates stacked together may be directly welded to the positive electrode post terminal to form an electrical connection. Alternatively, the battery cell assembly may further include a positive electrode adapting piece, the plurality of positive electrode tab plates stacked together are welded to one end of the positive electrode adapting piece, and the other end of the positive electrode adapting piece is welded to the positive electrode post terminal to form an electrical connection between the positive electrode tab plates and the positive electrode post terminal.

The negative electrode plate may generally include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. Illustratively, the plurality of negative electrode tab plates stacked together may be directly welded to the negative electrode post terminal to form an electrical connection. Alternatively, the battery cell assembly may further include a negative electrode adapting piece, the plurality of negative electrode tab plates stacked together are welded to one end of the negative electrode adapting piece, and the other end of the negative electrode adapting piece is welded to the negative electrode post terminal to form an electrical connection between the negative electrode tab plates and the negative electrode post terminal.

The material of the separator is not limited, such as polypropylene or polyethylene.

Meanwhile, a battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, lithium manganate, etc., the material of the negative electrode current collector may be copper, and the material of the negative electrode active substance layer may be carbon, silicon, etc. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

The battery mentioned in the embodiments of the present application refers to a single physical module including one or a plurality of battery cells to provide higher voltage and capacity. For example, the battery mentioned in the present application may be a battery module, a battery pack, or the like. A battery module generally includes a plurality of battery cells. A battery pack generally includes a case used for encapsulating one or a plurality of battery cells or one or a plurality of battery modules. The case can mitigate liquid or other foreign matters from affecting the charging or discharging of the battery cells.

In the battery, a plurality of battery cells may be connected in series, in parallel, or in series-parallel. The series-parallel connection means that both series connection and parallel connection are present for the connection among the plurality of battery cells. The plurality of battery cells can be directly connected in series, in parallel, or in series-parallel, and then the whole formed by the plurality of battery cells is accommodated in the case. Alternatively, the battery may also be in a form where a plurality of battery cells are first connected in series, in parallel, or in series-parallel to give a battery module, and then a plurality of battery modules are connected in series, in parallel, or in series-parallel to form a whole and accommodated in the case.

The battery in the related art further includes a busbar component, and the busbar component is configured to achieve electrical connection among a plurality of battery cells. When the battery is manufactured, the busbar component is welded to the post terminal of the battery cell to achieve the electrical connection between the busbar component and the post terminal. Meanwhile, the post terminal can be electrically connected to the battery cell assembly through welding to the conductive parts, such as the tab plates or the adapting piece. Generally, the post terminal is an integrally formed part and is mounted to the housing in a riveted manner, such that the form of the post terminal needs to conform to the riveting requirements, and the post terminal is made of the same material, which limits the structural form and the material of such a post terminal. The post terminal is difficult to be flexibly modified into other novel structures or formed by various materials, making it difficult to meet more scenario requirements.

Based on the above considerations, in order to improve the design diversity and multi-scenario adaptability of the post terminal, the present application designs a battery cell, where the post terminal is arranged to include at least two parts that are separately formed, such that the structural form and the material of each part can be separately designed, which is conducive to flexibly designing the post terminal in various novel forms. In addition, at least a part of one part of the post terminal can be disposed outside the housing, and the part can be arranged to be suitable for direct or indirect connection to a busbar component; and at least a part of the other part of the post terminal can be disposed inside the housing, and the part can be arranged to be suitable for connection to a conductive part of a battery cell assembly, such that the post terminal can well meet the requirements of good connection to both the conductive part and the busbar component, thereby improving the design diversity and multi-scenario adaptability of the post terminal.

The embodiments of the present application further provide an electric device using the battery of the present application as a power source. The electric device may be, but is not limited to, a mobile phone, a tablet, a laptop computer, an electric toy, an electric tool, an electric bicycle, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

For ease of explanation in the following embodiments, the structures of the electric device, the battery, and the battery cell of the present application are described by taking the electric device as a vehicle as an example.

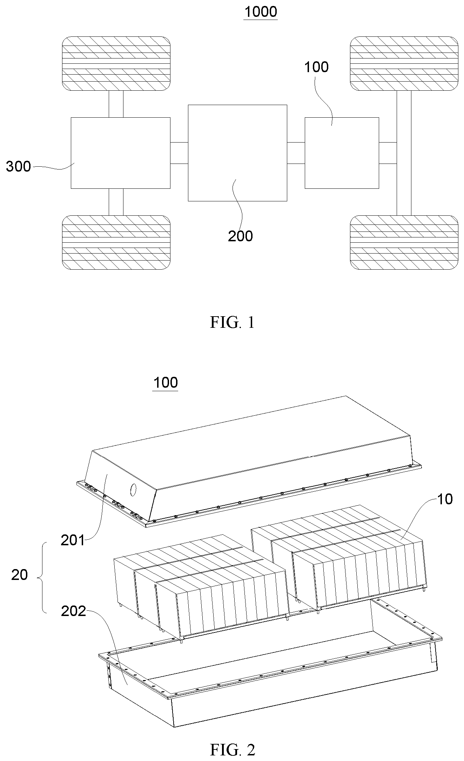

Referring to FIG. 1, FIG. 1 is a schematic structural diagram of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 100 is arranged in the vehicle, and the battery 100 may be arranged at the bottom, head, or tail of the vehicle. The battery 100 may be configured to supply power to the vehicle. For example, the battery 100 may serve as an operation power source of the vehicle. The vehicle may further include a controller 200 and a motor 300. The controller 200 is configured to control the battery 100 to power the motor 300, e.g., for operation power needed by the vehicle for start-up, navigation, and driving. In some embodiments of the present application, the battery 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery cell 10 used in the battery 100 according to some embodiments of the present application. The battery 100 includes a case 20 and a plurality of battery cells 10, and the battery cells 10 are accommodated in the case 20. The case 20 is configured to provide an assembly space for the battery cell 10, and the case 20 may be in various structures. In some embodiments, the case 20 may include a first case 201 and a second case 202. The first case 201 and the second case 202 are lidded with each other. The first case 201 and the second case 202 jointly define an assembly space for accommodating the battery cell 10. The second case 202 may be of a hollow structure with one end open, the first case 201 may be of a plate structure, and the first case 201 lids the open side of the second case 202, such that the first case 201 and the second case 202 jointly define an assembly space; or both the first case 201 and the second case 202 may be of hollow structures with one side open (for example, as shown in FIG. 2), and the open side of the first case 201 lids the open side of the second case 202. Certainly, the case 20 formed by the first case 201 and the second case 202 may be in various shapes, such as a cylinder or a rectangular parallelepiped.

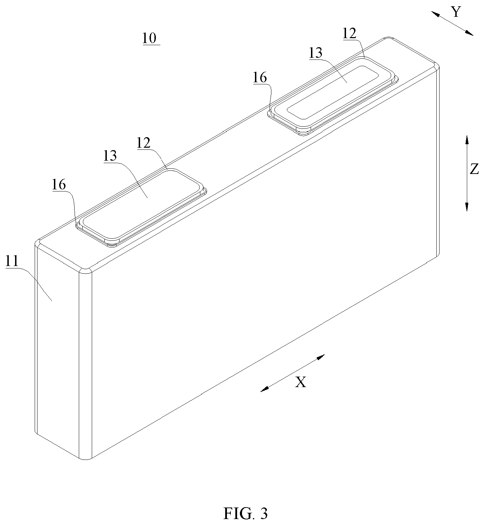

Referring to FIG. 3, FIG. 3 is a schematic diagram of a battery cell 10 according to some embodiments of the present application. The battery cell 10 is in the shape of a rectangular parallelepiped, and the height direction of the battery cell 10 is the first direction Z, the length direction of the battery cell 10 is the second direction X, and the thickness direction of the battery cell 10 is the third direction Y. The first direction Z, the second direction X, and the third direction Y are perpendicular to each other, which is, however, not limiting. In other embodiments of the present application, the battery cell 10 may also be cylindrical, flat, multi-prismatic, or in other shapes.

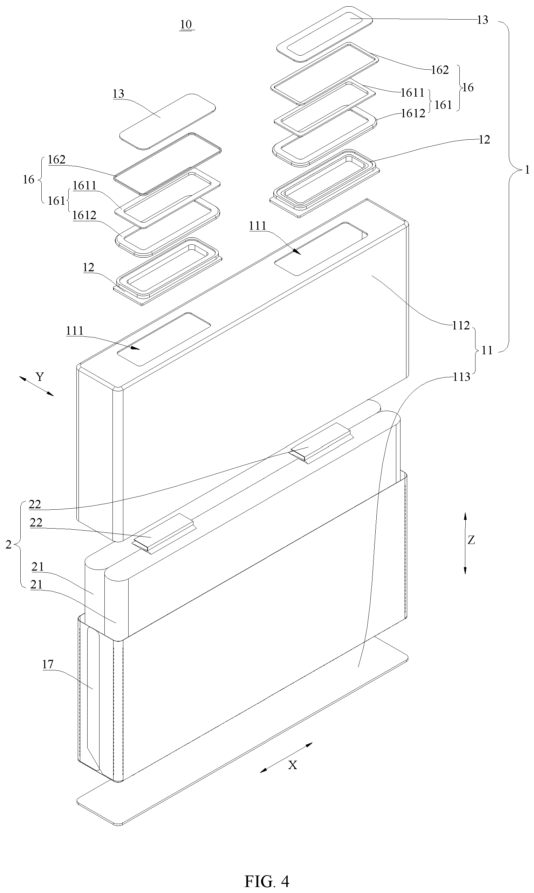

Referring to FIG. 4, FIG. 4 is an exploded view of the battery cell shown in FIG. 3. In the embodiments of the present application, the battery cell 10 includes a housing assembly 1 and a battery cell assembly 2. The housing assembly 1 includes a housing 11 and a first post terminal 12 disposed on the housing 11. The shape of the housing 11 is adjusted according to the type of the battery cell 10, and the type of the battery cell 10 in the embodiments of the present application is not limited. For example, when the battery cell 10 is a square battery, the housing 11 is square, and when the battery cell 10 is a cylindrical battery, the housing 11 is cylindrical. The embodiments of the present application are all described by taking the housing 11 as a square as an example.

The housing 11 is provided with post terminals for electrical connection to the battery cell assembly 2 to ensure normal charging and discharging operations of the battery cell 10. Generally, the number of post terminals is at least two, specifically including at least one positive electrode post terminal and at least one negative electrode post terminal. For example, when the number of post terminals is two, one is a positive electrode post terminal and the other is a negative electrode post terminal, and the two are electrically connected to positive and negative output positions of the battery cell assembly 2, separately. For another example, when the number of post terminals is four, two may be positive electrode post terminals and two may be negative electrode post terminals. In this case, the two positive electrode post terminals are both electrically connected to a positive output position of the battery cell assembly 2, and the two negative electrode post terminals are both electrically connected to a negative output position of the battery cell assembly 2.

In the embodiments of the present application, at least one of the plurality of post terminals on the housing 11 is the first post terminal 12, the first post terminal 12 can be used as a positive electrode post terminal or a negative electrode post terminal, and the first post terminal 12 is a post terminal that is separately formed in parts and then connected. That is, all the post terminals on the housing 11 may be the separately formed first post terminals 12, or a part of the post terminals on the housing 11 may be the separately formed first post terminals 12. When a part of the post terminals on the housing 11 are the separately formed first post terminals 12, the remaining post terminals on the housing 11 are integrally formed second post terminals (not shown).

Regardless of whether the post terminal on the housing 11 is the first post terminal 12 or the second post terminal, the first post terminal 12 and the second post terminal can be both electrically connected to the battery cell assembly 2 to ensure the normal charging and discharging processes of the battery cell 10. Certainly, in other embodiments of the present application, only one post terminal may be disposed on the housing assembly 1, which is the first post terminal 12. In this case, the first post terminal 12 may include one part that is connected in an insulating manner and used as a positive electrode post terminal and another part used as a negative electrode post terminal. In order to simplify the description, the following description is mainly made with the housing 11 being provided with a plurality of post terminals, and all the post terminals being the first post terminals 12 as an example.

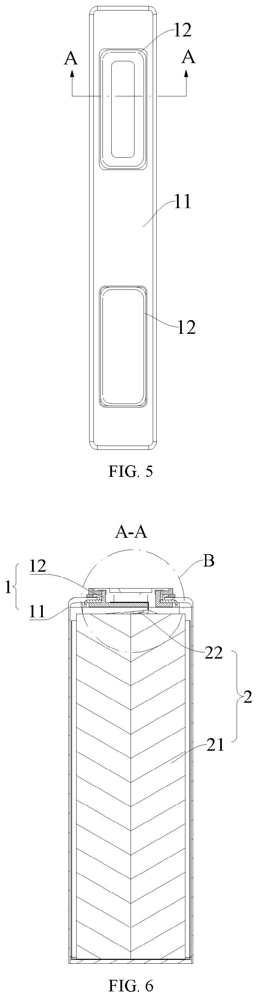

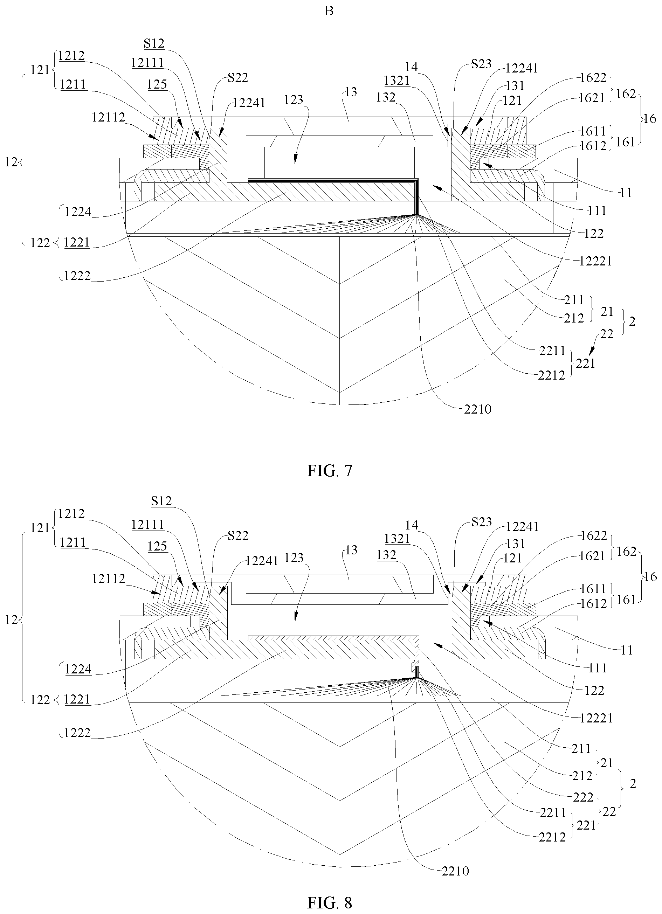

Referring to FIGs. 5-7, FIG. 5 is an orthographic projection view of the battery cell shown in FIG. 3, FIG. 6 is a cross-sectional view along the line A-A in FIG. 5, and FIG. 7 is a partially enlarged view of the portion B shown in FIG. 6. In the embodiments of the present application, the battery cell assembly 2 includes an active substance-coated part 21 and a conductive part 22. The active substance-coated part 21 is disposed in the housing 11. The active substance-coated part 21 is a part of the battery cell assembly 2 coated with an active substance, and can assist in the deintercalation of metal ions during the charging and discharging processes of the battery cell 10. The conductive part 22 is a metal structure that electrically connects the active substance-coated part 21 and the post terminal, and is not coated with the active substance. Both the first post terminal 12 and the second post terminal can be electrically connected to the active substance-coated part 21 through the conductive part 22 to enable the charging and discharging operations of the battery cell 10. For example, the conductive part 22 may include only tab plates, and the tab plates are directly electrically connected to the post terminal. For another example, the conductive part may include tab plates and an adapting piece connected to the tab plates by welding, and the tab plates are indirectly electrically connected to the post terminal via the adapting piece.

It can be understood that the active substance-coated part 21 is divided into a positive electrode active substance-coated part and a negative electrode active substance-coated part. The positive electrode active substance-coated part includes a part in which the positive electrode current collector is coated with a positive electrode active substance layer, and the negative electrode active substance-coated part includes a part in which the negative electrode current collector is coated with a negative electrode active substance layer. The conductive part 22 is divided into a positive electrode conductive part and a negative electrode conductive part. The positive electrode conductive part electrically connects the positive electrode active substance-coated part and the positive electrode post terminal, and the negative electrode conductive part electrically connects the negative electrode active substance-coated part and the negative electrode post terminal.

Referring to FIGs. 4, 6 and 7 again, in the embodiments of the present application, the housing 11 is provided with a mounting hole 111, and the first post terminal 12 is provided in the mounting hole 111 in a penetrating manner. The first post terminal 12 includes a first post terminal part 121 and a second post terminal part 122 that are separately formed and connected to each other. That is, the first post terminal part 121 is separately machined, the second post terminal part 122 is also separately machined, and the first post terminal part 121 and the second post terminal part 122 are not integrally formed parts, but are directly or indirectly connected together through welding, bonding, and other processes. Therefore, the structural form and the material of the first post terminal part 121 and the structural form and the material of the second post terminal part 122 can be designed separately, which is conducive to flexibly designing the first post terminal 12 in various novel forms and improving the design diversity of the first post terminal 12.

In the embodiments of the present application, at least a part of the first post terminal part 121 is stopped outside the housing 11, at least a part of the second post terminal part 122 is stopped inside the housing 11, and the second post terminal part 122 is connected to the conductive part 22. Referring to FIG. 7 again, the first post terminal part 121 includes a first stopper part 1211, and the first stopper part 1211 directly or indirectly abuts against the outer side of the housing 11 to prevent the first post terminal part 121 from entering the housing 11 through the mounting hole 111. The second post terminal part 122 includes a second stopper part 1221, and the second stopper part 1221 directly or indirectly abuts against the inner side of the housing 11 to prevent the second post terminal part 122 from moving out of the housing 11 through the mounting hole 111.

The second post terminal part 122 and the conductive part 22 are connected by welding or other means to be electrically connected to each other. Since at least a part of the two post terminal parts is stopped inside the housing 11 and the second post terminal part 122 is connected to the conductive part 22, the structural form, the material, and the like of the second post terminal part 122 can be provided to be suitable for connection to the conductive part 22. Meanwhile, since at least a part of the first post terminal part 121 is stopped outside the housing 11, the first post terminal part 121 can be directly or indirectly connected to the busbar component, such that the structural form, the material, and the like of the first post terminal part 121 can be provided to be suitable for direct or indirect connection to the busbar component. Therefore, the first post terminal 12 can well meet the requirements of good connection to both the conductive part 22 and the busbar component, thereby improving the multi-scenario adaptability of the first post terminal 12.

In the above technical solution, the first post terminal 12 is arranged to include the first post terminal part 121 and the second post terminal part 122 that are separately formed, at least a part of the first post terminal part 121 is stopped outside the housing 11, at least a part of the second post terminal part 122 is stopped inside the housing 11, and the second post terminal part 122 is connected to the conductive part 22, such that the structural forms and materials of the first post terminal part 121 and the second post terminal part 122 can be separately designed and selected, which is conducive to flexibly designing the post terminal in various novel forms, and improving the design diversity of the first post terminal 12 and enriching the application scenarios of the first post terminal 12. Specifically, the structural form and the material of the second post terminal part 122 can be provided to provide convenience for connection to the conductive part 22, and the structural form and the material of the first post terminal part 121 can be provided to be suitable for direct or indirect connection to the busbar component, such that the first post terminal 12 can well meet the requirements of good connection to both the conductive part 22 and the busbar component, thereby achieving a flexible design and expanded application scenarios of the first post terminal 12, which is conducive to improving the design diversity of the battery cell 10.

Referring to FIG. 7 again, in some embodiments of the present application, the second post terminal part 122 includes a first connecting part 1222, the first post terminal 12 has a cavity 123 formed on a side of the first connecting part 1222 distal to the active substance-coated part 21, and at least a part of the conductive part 22 is received in the cavity 123 and connected to the first connecting part 1222. Therefore, at least a part of the conductive part 22 is arranged to be accommodated in the cavity 123, such that at least the part of the conductive part 22 can occupy the space inside the first post terminal 12, the space occupied by the conductive part 22 in the housing 11 can be reduced, and some space can be saved in the housing 11 for accommodating the active substance-coated part 21 of a larger size, thereby improving the volumetric energy density of the battery cell 10.

In the embodiments of the present application, at least the first connecting part 1222 in the second post terminal part 122 has a hardness greater than that of the first post terminal part 121. That is, only the hardness of the first connecting part 1222 may be greater than that of the first post terminal part 121, or the hardness of the whole second post terminal part 122 may be greater than that of the first post terminal part 121.

It should be noted that the materials of the first connecting part 1222 and the first post terminal part 121 are not limited and can be selected from various kinds of materials, such as two kinds of copper materials of different hardness, or two kinds of aluminum materials of different hardness. For example, any one of the aluminum materials A13003-H14, A13003-H18, A13003-H112, A11060-H14, A11060-H18, and A11060-H112 can be selected for the first post terminal part 121 and the first connecting part 1222 (it can be understood that the hardness of H14 is lower than that of H18, and the hardness of H18 is lower than that of H112), as long as the selected material meets the requirement that the hardness of the first connecting part 1222 is greater than that of the first post terminal part 121. For example, when the first connecting part 1222 is made of A11060-H112 or A13003-H112, the first post terminal part 121 may be made of any one of A13003-H14, A13003-H18, A11060-H14, and A11060-H18. For another example, when the first connecting part 1222 is made of A11060-H18 or A13003-H18, the first post terminal part 121 may be made of A13003-H14 or Al1060-H14.

Relevant contents about hardness measurement are briefly introduced below. The testing operation is performed as follows: 1) The power supply is turned on to check whether the test equipment (such as a Vickers hardness tester) is normal or not. 2) A cut test sample is placed under the lens of the Vickers hardness tester, the test line is adjusted to zero through the ocular lens, and the lifting lever is adjusted to ensure that the surface of the sample is clearly visible through the ocular lens. 3) After the lifting lever is adjusted, the start button is pressed to start loading onto the sample. 4) Once the loading is finished, the lengths of two diagonal lines of the indentation are measured through the ocular lens, and input into the equipment. The equipment will automatically display the Vickers hardness value and record the measurement result. Through the hardness measurement, the magnitude relationship of the hardness of the first connecting part 1222 and the first post terminal part 121 can be learned.

In the above technical solution, since the cavity 123 is formed on the side of the first connecting part 1222 distal to the active substance-coated part 21, the first connecting part is liable to deformation due to the lack of support from the housing 11. However, the hardness of at least the first connecting part 1222 in the second post terminal part 122 is set to be greater than that of the first post terminal part 121 in the present application, such that the deformation of the first connecting part 1222 can be reduced to a certain extent, the connection reliability between the first connecting part 1222 and the conductive part 22 can be improved, and the conductive yield can be improved.

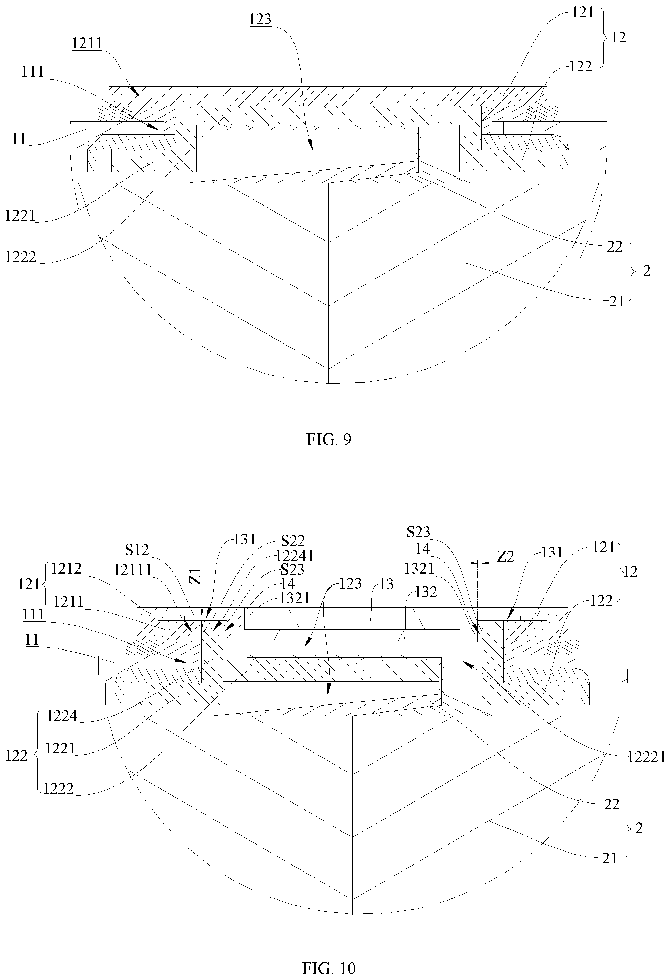

Besides, the first post terminal part 121 of relatively low hardness is conducive to improving the yield of the electrical connection between the first post terminal part 121 and the busbar component. Referring to FIG. 7 again, when the first post terminal part 121 is of a hollow structure, the post terminal of the cover plate 13 may be welded on the first post terminal part 121, and the busbar component is welded on the post terminal cover plate 13, which, due to the relatively low hardness of the first post terminal part 121, is conducive to improving the welding yield of the first post terminal part 121 and the post terminal cover plate 13, and thus improving the yield of electrical connection between the first post terminal part 121 and the busbar component. Referring to FIG. 9, FIG. 9 is a partial cross-sectional view of the battery cell 10 according to some embodiments of the present application. When the first post terminal part 121 is of a solid structure, the busbar component may be directly welded on the first post terminal part 121, which, due to the relatively low hardness of the first post terminal part 121, is conducive to improving the welding yield of the first post terminal part 121 and the busbar component, and thus improving the yield of electrical connection between the first post terminal part 121 and the busbar component.

In the related art, the post terminal is an integrally formed part and is riveted to the housing. If the hardness of the post terminal is high, it is difficult to meet the ductility requirements of riveting and flanging, and the process is difficult; and if the hardness of the post terminal is low, a part of the post terminal corresponding to the cavity and connected to the conductive part is liable to deformation, and the insufficient strength makes it difficult to reliably connect to the conductive part. However, in the present application, the first post terminal 12 is arranged to include the second post terminal part 122 and the first post terminal part 121 that are separately machined, the second post terminal part 122 and the first post terminal part 121 have different hardness, the second post terminal part 122 of a higher hardness is unlikely to deform and is conducive to reliable connection to the conductive part 22, and the first post terminal part 121 of a lower hardness has a better welding yield and is conducive to direct or indirect electrical connection to the busbar component.

In addition, the first stopper part 1211 of the first post terminal part 121 may be directly formed when the first post terminal part 121 is processed, or may be subsequently formed by riveting the first post terminal part 121 to the housing 11. Since the first post terminal part 121 has relatively low hardness and good ductility, the first post terminal part 121 facilitates riveting. In order to simplify the processing, the first stopper part 1211 may be directly formed when the first post terminal part 121 is processed, and the second post terminal part 12 can be fixed to the housing 11 by welding the first post terminal part 121 and the second post terminal part 122. In this case, the first post terminal part 121 does not need to be connected to the housing 11 by riveting, thereby simplifying the assembly process and improving the assembly efficiency.

It is worth noting that the relative positions of the cavity 123 and the first connecting part 1222 are not limited to the above description. For example, referring to FIG. 9 again, the first post terminal 12 may also have a cavity 123 formed on a side of the first connecting part 1222 facing the active substance-coated part 21, which is conducive to increasing the volume of the conductive part 22 accommodated in the cavity 123, and the cavity 123 may be provided in a closed manner to mitigate the problem that the electrolytic solution and the like in the housing 11 flow out from the first post terminal 12. Alternatively, for another example, referring to FIG. 10, FIG. 10 is a partial cross-sectional view of the battery cell 10 according to some embodiments of the present application. The first post terminal 12 may also have cavities 123 formed on a side of the first connecting part 1222 facing the active substance-coated part 21 and a side distal to the active substance-coated part 21, separately. A perforation 12221 communicating the cavities 123 on two sides of the first connecting part 1222 is formed on the first connecting part 1222, and the conductive part 22 may partially extend into the cavity 123 at the outer side of the first connecting part 1222 through the perforation 12221, thereby facilitating the connection between the conductive part 22 and the first connecting part 1222 from the outer side. The "outer side" refers to a side distal to the active substance-coated part 21.

In some embodiments, referring to FIG. 7 again, the perforation 12221 is formed at an edge position of the first connecting part 1222 that is connected to the second connecting part 1224. In the above technical solution, since the perforation 12221 is formed at a position of the first connecting part 1222 proximal to the second connecting part 1224, when at least a part of the conductive part 22 extending into the cavity 123 is connected to the first connecting part 1222, the first connecting part 1222 can have a larger area to be connected to the conductive part 22, which is conducive to increasing the connection area between the conductive part 22 and the first connecting part 1222, thereby increasing the connection reliability and the conductive area between the conductive part 22 and the first connecting part 1222.

In some embodiments, referring to FIG. 7 again, the active substance-coated part 21 includes a current collector 211 and an active substance layer 212 disposed on the current collector 211. The conductive part 22 includes a tab part 221 electrically connected to the current collector 211. The tab part 221 includes a plurality of tab plates 2210. Parts of the plurality of tab plates 2210 proximal to the current collector 211 converge to form a first gathering part 2211, and parts of the plurality of tab plates 2210 distal to the current collector 211 converge and are connected to form a second gathering part 2212. The first gathering part 2211 connects the second gathering part 2212 and the active substance-coated part 21.

In the above technical solution, the plurality of tab plates 2210 only converge (that is, get together in a direction toward each other) and gather but are not connected when forming the first gathering part 2211, while the plurality of tab plates 2210 not only converge and gather but are also connected into an integrated structure when forming the second gathering part 2212. For example, the plurality of tab plates 2210 may be connected into an integrated plate structure by welding (such as ultrasonic welding) to form the second gathering part 2212. For example, the plurality of tab plates 2210 may also converge and be connected to form the second gathering part 2212 by conductive adhesive bonding, etc., which will not be described in detail herein.

It should be noted that in the embodiments of the present application, the tab plates 2210 are divided into positive electrode tab plates and negative electrode tab plates. The positive electrode tab plates that need to gather together are stacked together and ultrasonically pre-welded to form a second gathering part of the positive electrode, which can reduce the gap between layers and enable the plurality of fluffy positive electrode tab plates to form a plate structure of a certain rigidity. Similarly, the negative electrode tab plates that need to gather together are stacked together and ultrasonically pre-welded to form a second gathering part of the negative electrode, which can reduce the gap between layers and enable the plurality of fluffy negative electrode tab plates to form a plate structure of a certain rigidity.

In the above technical solution, the "parts of the plurality of tab plates 2210 proximal to the current collector 211 converge to form a first gathering part 2211, and parts of the plurality of tab plates 2210 distal to the current collector 211 converge and are connected to form a second gathering part 2212" is intended to illustrate that: in the extension direction of the tab plates 2210, the first gathering part 2211 and the second gathering part 2212 are sequentially arranged in a direction away from the current collector 211, and the specific positions of the first gathering part 2211 and the second gathering part 2212 are not limited, that is, it is not required how close the first gathering part 2211 is to the current collector 211, or how far the second gathering part 2212 is from the current collector 211. In some optional examples, the current collector 211 and the tab plates 2210 may be an integrated member, such as an integrally formed aluminum foil for the positive electrode plates, and an integrally formed copper foil for the negative electrode plates.

In some optional examples, referring to FIG. 7 again, the conductive part 22 is formed by the tab part 221, and at least a part of the second gathering part 2212 passes through the perforation 12221 and is received in the cavity 123. In the above technical solution, since the tab part 221 includes the second gathering part 2212 formed by converging and connecting the plurality of tab plates 2210, at least a part of the second gathering part 2212 can pass through the perforation 12221 and be received in the cavity 123, and the conductive part 22 can be simplified in construction and processing.

In other optional examples, referring to FIG. 8, FIG. 8 is a partial cross-sectional view of a battery cell according to some embodiments of the present application. The conductive part 22 includes the tab part 221 and an adapting piece 222, at least a part of the adapting piece 222 passes through the perforation 12221 and is received in the cavity 123, and the adapting piece 222 is connected between the second gathering part 2212 and the first connecting part 1222. In the above technical solution, since the conductive part 22 includes the tab part 221 and the adapting piece 222, the adapting piece 222 can pass through the perforation 12221, such that the operation is convenient. Besides, by using the adapting piece 222 to achieve an indirect electrical connection between the second gathering part 2212 and the first connecting part 1222, the adapting piece 222 can be connected to the first connecting part 1222 at a part avoiding the second gathering part 2212, such that the welding between the adapting piece 222 and the first connecting part 1222 is firm, welding cracks are unlikely to occur, and the reliability and stability of the battery cell 10 can be further improved.

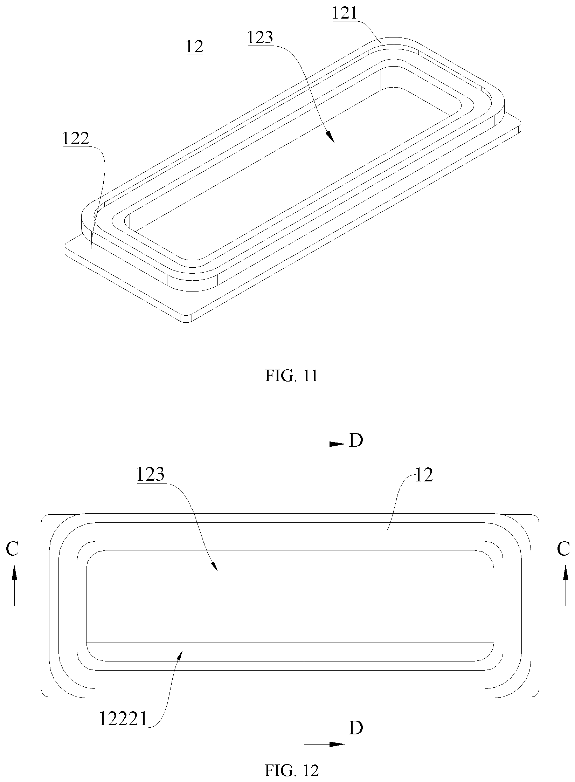

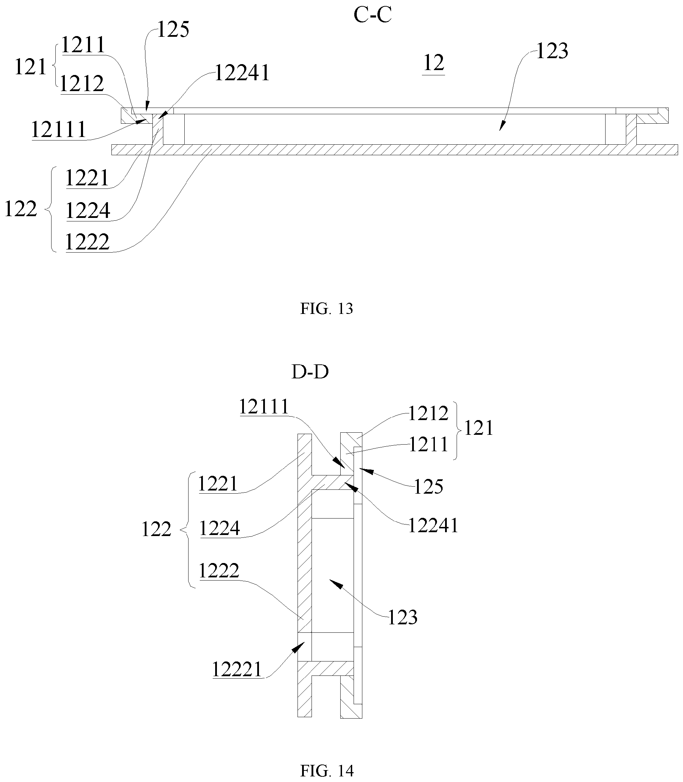

Referring to FIGs. 7 and 11-14, FIG. 11 is a three-dimensional view of the first post terminal 12 according to some embodiments of the present application, FIG. 12 is an orthographic projection view of the battery cell 10 shown in FIG. 11, FIG. 13 is a cross-sectional view along the line C-C in FIG. 12, and FIG. 14 is a cross-sectional view along the line D-D in FIG. 12. In some embodiments of the present application, the second post terminal part 122 further includes a second connecting part 1224 provided in the mounting hole 111 in a penetrating manner, the second connecting part 1224 is formed in an annular structure disposed around an inner wall of the mounting hole 111, the first connecting part 1222 is disposed in an annular region of the second connecting part 1224 and connected to an inner end part of the second connecting part 1224 proximal to the active substance-coated part 21, the second connecting part 1224 and the first connecting part 1222 jointly define the cavity 123 in an enclosing manner, the cavity 123 is open in a direction away from the active substance-coated part 21, a perforation 12221 that is in communication with the cavity 123 is formed on the first connecting part 1222, and the conductive part 22 partially passes through the perforation 12221 and is received in the cavity 123.

The shape of the second connecting part 1224 is configured in an annular structure matching the shape of the mounting hole 111. Here, it should be noted that the annular structure described in the present application is not limited to a circular ring shape, but may also be, for example, a rectangular ring shape, a racetrack ring shape, or an elliptical ring shape.

In the above technical solution, the second post terminal part 122 includes the second connecting part 1224 provided in the mounting hole 111 in a penetrating manner, which facilitates the assembly of the second post terminal part 122 and the housing 11. Besides, the second connecting part 1224 of the annular structure and the first connecting part 1222 connected to the inner end part of the second connecting part 1224 jointly define the cavity 123, such that the structure of the second post terminal part 122 can be simplified, and the receiving volume of the cavity 123 can be increased. Moreover, since the cavity 123 is open in the direction away from the active substance-coated part 21, the conductive part 22 partially extends into the cavity 123 through the perforation 12221 on the first connecting part 1222, which is conducive to connecting the conductive part 22 to the first connecting part 1222 from the outside of the housing 11, and facilitates the manufacture of the battery cell 10.

It is worth noting that the number, position, shape, and the like of the perforation 12221 are not limited. For example, one or at least two perforations may be formed, the perforation may for example be located at the center or the edge of the first connecting part 1222, and the perforation may for example be rectangular, oblong, or elliptical.

Referring to FIG. 7 again, in some embodiments of the present application, the first post terminal part 121 is located outside the housing 11 and is an annular structure, the second post terminal part 122 includes a second connecting part 1224 provided in the mounting hole 111 in a penetrating manner, the second connecting part 1224 is formed in an annular structure disposed around the inner wall of the mounting hole 111, and an end of the second connecting part 1224 distal to the active substance-coated part 21 extends to be connected to an inner peripheral part 12111 of the first post terminal part 121. It can be understood that when the first post terminal part 121 includes the annular first stopper part 1211, an inner end of the first stopper part 1211 forms the inner peripheral part 12111 of the first post terminal part 121.

In the above technical solution, the first post terminal part 121 is located outside the housing 11 and is an annular structure, and the second connecting part 1224 is formed in an annular structure disposed around the inner wall of the mounting hole 111 and an outer end part 12241 of the second connecting part can extend to the inner peripheral part 12111 of the first post terminal part 121, such that the construction of the first post terminal 12 can be simplified, the number of parts can be reduced, and the processing and production efficiency can be improved. Besides, since both the first post terminal part 121 and the second connecting part 1224 are annular structures, operations, such as welding, can be performed on the first post terminal part 121 and the second connecting part 1224 from the outside of the housing 11 and at the inner periphery of the first post terminal part 121, thereby improving the welding reliability and reducing the difficulty of welding.

It is worth noting that the connection mode of the first post terminal part 121 and the second post terminal part 122 is not limited, and may be, for example, welding, or bonding. In addition, in other embodiments of the present application, the first post terminal part 121 and the second post terminal part 122 may also be indirectly connected. For example, the first post terminal 12 may further include a separately machined third post terminal part (not shown), the third post terminal part is provided in the mounting hole 111 in a penetrating manner, an outer end of the third post terminal part is welded to the first post terminal part 121, an inner end of the third post terminal part is welded to the second post terminal part 122, and the like.

In addition, in other embodiments of the present application, the first post terminal part 121 may not be configured in an annular structure located outside the housing 11. For example, referring to FIG. 9 again, the first post terminal part 121 may be a solid cover plate structure, and in this case, the first post terminal part 121 and the second post terminal part 122 may be laser welded from the outside or the inside of the housing 11. Alternatively, for another example, the first post terminal part 121 may be arranged to include a third connecting part (not shown) provided in the mounting hole 111 in a penetrating manner, and in this case, the second post terminal part 122 may be located inside the housing 11, and the third connecting part extends to the second post terminal part 122 in a direction close to the active substance-coated part 21 and is welded to the second post terminal part 122.

When "an end of the second connecting part 1224 distal to the active substance-coated part 21 extends to and is connected to the inner peripheral part 12111 of the first post terminal part 121", referring to FIG. 10 again, in some optional embodiments, the end of the second connecting part 1224 distal to the active substance-coated part 21 is the outer end part 12241, and the outer end part 12241 extends to a side of the inner peripheral part 12111 proximal to the central axis of the mounting hole 111. That is, in the radial direction of the mounting hole 111, the outer end part 12241 is disposed proximal to the central axis of the mounting hole 111 relative to the inner peripheral part 12111. An inner side surface S12 of the inner peripheral part 12111 is disposed face to face with and connected to an outer side surface S22 of the outer end part 12241 by welding, where the inner side surface S12 of the inner peripheral part 12111 is a side surface of the inner peripheral part 12111 facing the central axis of the mounting hole 111, and the outer side surface S22 of the outer end part 12241 is a side surface of the outer end part 12241 distal to the central axis of the mounting hole 111. Therefore, a weld seam between the inner side surface S12 of the inner peripheral part 12111 and the outer side surface S22 of the outer end part 12241 can be located at an outer surface of the first post terminal 12 distal to the active substance-coated part 21, thereby facilitating welding from the outside of the housing 11, reducing the difficulty of welding, and improving the welding yield.

Referring to FIG. 10 again, in some embodiments of the present application, the housing assembly 1 further includes a post terminal cover plate 13 located outside the housing 11 and lidding the first post terminal part 121, a clearance groove 131 is formed on the post terminal cover plate 13, and the clearance groove 131 corresponds to a welding position of the outer end part 12241 and the inner peripheral part 12111 for accommodating a weld mark. That is, the weld mark formed by welding the outer end part 12241 and the inner peripheral part 12111 can be at least partially accommodated in the clearance groove 131, such that the problem of interference between the weld mark and the post terminal cover plate 13 can be mitigated, such that the post terminal cover plate 13 can still be assembled smoothly with the first post terminal part 121 after the outer end part 12241 is welded to the inner peripheral part 12111, thereby improving the compactness and the reliability of the connection between the post terminal cover plate 13 and the first post terminal part 121.

Illustratively, the inner peripheral part 12111 and the outer end part 12241 may be laser welded, and a weld mark may be formed at the welding position, which may protrude from the surface of the welding position. The clearance groove 131 disposed at a position of the post terminal cover plate 13 corresponding to the weld mark for accommodating the weld mark can mitigate the interference caused by the weld mark to the mounting of the post terminal cover plate 13, improve the compactness of fit between the post terminal cover plate 13 and the first post terminal part 121, and improve the reliability of the connection between the post terminal cover plate 13 and the first post terminal part 121.

The connection mode of the first post terminal part 121 and the post terminal cover plate 13 is not limited, and may be, for example, welding, bonding, or flanging and buckling. The first post terminal part 121 is lidded with the post terminal cover plate 13, which can mitigate the problem that the electrolytic solution and the like flow out from the annular region of the first post terminal part 121, and achieve a sealing effect.

Illustratively, as shown in FIG. 7, the first post terminal part 121 further includes an extending part 1212, the extending part 1212 may extend, in a direction away from the first stopper part 1211, from an end surface of the outer end 12112 of the first stopper part 1211 on a side distal to the housing 11, such that the first post terminal part 121 may have a groove 125 formed between the extending part 1212 and the first stopper part 1211, and the post terminal cover plate 13 may be embedded in the groove 125. Therefore, the assembly efficiency, connection reliability, and fit compactness of the post terminal cover plate 13 and the first post terminal part 121 can be improved.

In addition, the post terminal cover plate 13 may be made of a conductive material, such that the post terminal cover plate 13 is electrically connected to the first post terminal part 121, and the busbar component can be welded to the post terminal cover plate 13, which allows to electrically connect the first post terminal 12 to the busbar component through the post terminal cover plate 13. When the first post terminal part 121 and the busbar component are made of the same material, the post terminal cover plate 13 may be provided as an integral cover plate and made of the same material as the busbar component. When the first post terminal part 121 and the busbar component are made of different materials, the post terminal cover plate 13 may be provided as a composite cover plate formed by combining two parts, one of which is made of the same material as the busbar component for welding and the other made of the same material as the first post terminal part 121 for welding.

Illustratively, referring to FIG. 10, the depth Z1 of the clearance groove 131 may be greater than or equal to 0.2 mm, such that after the first post terminal part 121 is welded to the second post terminal part 122, the post terminal cover plate 13 can effectively avoid the weld mark so as to be smoothly mounted to the first post terminal part 121. In addition, the depth Z1 of the clearance groove 131 may be further set to be less than or equal to 0.4 mm to avoid an excessively large depth of the clearance groove 131, which is conducive to increasing the thickness of the post terminal cover plate 13 at the corresponding clearance groove 131, thereby increasing the structural strength and current conveyance efficiency of the post terminal cover plate 13 at the local position.

Illustratively, referring to FIG. 10, the post terminal cover plate 13 includes an embedded part 132 extending to the annular region of the second connecting part 1224, and an outer peripheral surface 1321 of the embedded part 132 is spaced apart from an inner side surface S23 of the outer end part 12241 to form a first gap 14. Specifically, since the inner peripheral part 12111 of the first post terminal part 121 is welded to the outer end part 12241 of the second post terminal part 122, the annular size of the second connecting part 1224 may be reduced, such that the embedded part 132 cannot extend into the annular region of the second connecting part 1224. However, in the present application, the first gap 14 is provided between the outer peripheral surface 1321 of the embedded part 132 and the inner side surface S23 of the outer end part 12241, such that after the first post terminal part 121 is welded to the second post terminal part 122, the annular region of the second connecting part 1224 still has a space for the embedded part 132 to extend to, thereby ensuring that the post terminal cover plate 13 can be smoothly mounted to the first post terminal part 121 subsequently.

Illustratively, referring to FIG. 10, the size Z2 of the first gap 14 may be greater than or equal to 0.2 mm, such that after the first post terminal part 121 is welded to the second post terminal part 122, the annular region of the second connecting part 1224 may have a sufficient space for the embedded part 132 to extend to, thereby improving the smoothness of mounting the post terminal cover plate 13 to the first post terminal part 121. In addition, the size Z2 of the first gap 14 may be further set to be less than or equal to 0.4 mm to avoid an excessively large first gap 14, which is conducive to increasing the volume of the embedded part 132 as much as possible, thereby reducing the resistance and improving the current conveyance efficiency.

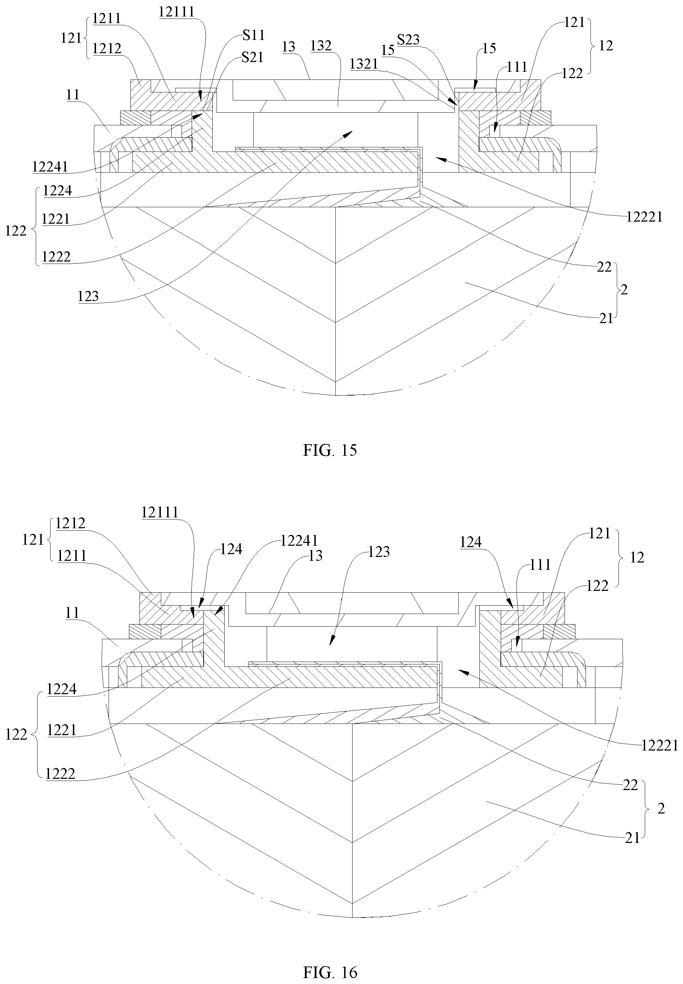

The present application is not limited to this, and there may be other optional embodiments when "an end of the second connecting part 1224 distal to the active substance-coated part 21 extends to and is connected to the inner peripheral part 12111 of the first post terminal part 121". For example, referring to FIG. 15, FIG. 15 is a partial cross-sectional view of the battery cell 10 according to some embodiments of the present application. The end of the second connecting part 1224 distal to the active substance-coated part 21 is the outer end part 12241, the inner peripheral part 12111 of the first post terminal part 121 abuts against a side of the outer end part 12241 distal to the active substance-coated part 21. That is, in the axial direction of the mounting hole 111, the inner peripheral part 12111 is disposed distal to the active substance-coated part 21 relative to the outer end part 12241, and the inner end surface S11 of the inner peripheral part 12111 is disposed face to face with and connected to the outer end surface S21 of the outer end part 12241 by welding, where the inner end surface S11 of the inner peripheral part 12111 is an end surface of the inner peripheral part 12111 on a side facing the active substance-coated part 21, and the outer end surface S21 of the outer end part 12241 is an end surface of the outer end part 12241 on a side distal to the active substance-coated part 21.

Therefore, the welding head can extend into the annular region of the first post terminal part 121 and the annular region of the second connecting part 1224 for welding. The flatness of the outer surface of the first post terminal 12 distal to the active substance-coated part 21 is slightly affected by the weld mark formed after welding, which is conducive to the subsequent welding of the first post terminal 12 and the post terminal cover plate 13 or the busbar component.

Illustratively, referring to FIG. 15 again, the housing assembly 1 further includes a post terminal cover plate 13 located outside the housing 11 and lidding the first post terminal part 121, the post terminal cover plate 13 is partially embedded in an annular region of the inner peripheral part 12111, and the post terminal cover plate 13 is spaced apart from the inner peripheral part 12111 to form a second gap 15.

Specifically, after the inner peripheral part 12111 of the first post terminal part 121 is welded to the outer end part 12241 of the second post terminal part 122, the weld seams formed at the annular region of the first post terminal part 121 and the annular region of the second connecting part 1224 may protrude in the radial direction, and the inner peripheral part 12111 is likely to protrude in a direction away from the active substance-coated part 21. The second gaps 15 separately provided at these two positions can ensure that the post terminal cover plate 13 can be smoothly assembled with the first post terminal part 121 after the first post terminal part 121 is welded to the second post terminal part 122. Therefore, in the above technical solution, by providing the second gap 15 between the post terminal cover plate 13 and the inner peripheral part 12111, the post terminal cover plate 13 can be ensured to be smoothly mounted after the first post terminal part 121 is welded to the second post terminal part 122, thereby improving the compactness and the reliability of the connection between the post terminal cover plate 13 and the first post terminal part 121.

In some embodiments of the present application, the first post terminal part 121 is connected to the second post terminal part 122 by welding. Therefore, the first post terminal 12 is simple in construction and can be easily mounted to the housing 11, which is conducive to reducing the production cost and improving the assembly efficiency.

Referring to FIG. 16, FIG. 16 is a partial cross-sectional view of the battery cell 10 according to some embodiments of the present application. Illustratively, when the first post terminal part 121 is connected to the second post terminal part 122 by welding, the first post terminal 12 is provided with a recess 124 at a welding position of the first post terminal part 121 and the second post terminal part 122, and the recess 124 is configured to accommodate a weld mark formed by welding the first post terminal part 121 and the second post terminal part 122. Therefore, the problem that the weld mark protrudes from the surface of the welding position, which may affect the subsequent assembly of other parts, such as the post terminal cover plate 13, with the first post terminal 12, can be mitigated.

Referring to FIGs. 4 and 7 again, in some embodiments of the present application, the housing assembly 1 further includes an insulating seal assembly 16, the insulating seal assembly 16 connects the housing 11 and the first post terminal 12 in an insulating manner, the insulating seal assembly 16 includes an insulating member 161 and an insulating sealing member 162 with stronger heat resistance than the insulating member 161, and the insulating sealing member 162 is located between the welding position of the first post terminal part 121 and the second post terminal part 122 and the housing 11.

The insulating seal assembly 16 is fitted between the housing 11 and the first post terminal 12, such that the housing 11 and the first post terminal 12 are insulated from each other. The insulating seal assembly 16 includes the insulating member 161 and the insulating sealing member 162. The insulating sealing member 162 has a sealing function in addition to an insulating function as compared to the insulating member 161, and the insulating sealing member 162 has stronger heat resistance than the insulating member 161.

In the above technical solution, the insulating seal assembly 16 is arranged to include the insulating member 161 with relatively weak heat resistance and the insulating sealing member 162 with sealing performance and relatively strong heat resistance, the insulating sealing member 162 is disposed between the welding position of the first post terminal part 121 and the second post terminal part 122 and the housing 11, and the insulating member 161 is disposed distal to the welding position of the first post terminal part 121 and the second post terminal part 122 relative to the insulating sealing member 162, such that the influence of the welding temperature on the insulating member 161 can be reduced by utilizing the insulating sealing member 162, and further, the cost of the insulating seal assembly 16 can be reduced while the insulating sealing effect is ensured.

Illustratively, the insulating member 161 may be made of plastic with a temperature tolerance of about 250°C, and the insulating sealing member 162 may be made of rubber with a temperature tolerance of about 400°C. Therefore, the cost can be lowered, good insulation and sealing effects can be ensured, and the insulating sealing member 162 can effectively reduce the influence of the welding temperature on the insulating member 161.

Referring to FIG. 7 again, in some embodiments of the present application, the welding position of the first post terminal part 121 and the second post terminal part 122 is located at an outer side of the mounting hole 111, the insulating member 161 includes an outer insulating member 1611 and an inner insulating member 1612, the outer insulating member 1611 is sandwiched between the first post terminal part 121 and an outer wall of the housing 11, the inner insulating member 1612 is sandwiched between the second post terminal part 122 and an inner wall of the housing 11, the insulating sealing member 162 includes an inner segment 1622 and an outer segment 1621, the inner segment 1622 extends inside the mounting hole 111, and the inner segment 1622 abuts against the first post terminal part 121 and the inner insulating member 1612 separately at two ends in the axial direction of the mounting hole 111, and the outer segment 1621 extends at the outer side of the mounting hole 111, and the outer segment 1621 is connected to the inner segment 1622 at a radial inner end and abuts against the outer insulating member 1611 at a radial outer end in the radial direction of the mounting hole 111.

Therefore, the assembly of the insulating seal assembly 16 is convenient, and due to the structural distribution position of the insulating sealing member 162, both the inner insulating member 1612 and the outer insulating member 1611 can well obtain heat insulation protection of the sealing insulating member 161. Moreover, the arrangement of the insulating sealing member 162 achieves a good sealing effect while ensuring low volume costs.

Certainly, the present application is not limited to this. For example, in other optional embodiments of the present application, the volume of the insulating sealing member 162 may be increased, and the inner segment 1622 of the insulating sealing member 162 abuts against the first post terminal part 121 and the second post terminal part 122 separately at two ends in the axial direction of the mounting hole 111, and the inner insulating member 1612 abuts against a side of the inner segment 1622 distal to the central axis of the mounting hole 111 (the embodiment is not shown in the drawings).

Referring to FIGs. 3-7 and 11-14 again, the battery cell 10 according to specific embodiments of the present application is described.

The battery cell 10 includes a housing assembly 1 and a battery cell assembly 2. The housing assembly 1 includes a housing 11, the housing 11 includes a housing body 112 and a bottom cover 113, a positive electrode post terminal and a negative electrode post terminal are provided on a side of the housing body 112 distal to the bottom cover 113, both the positive electrode post terminal and the negative electrode post terminal are first post terminals 12, and the first post terminal 12 is provided in a mounting hole 111 on the housing body 112 in a penetrating manner. The battery cell assembly 2 includes an active substance-coated part 21 and a conductive part 22, where the active substance-coated part 21 is wrapped with an insulating film 17 and is disposed in the housing 11, and the conductive part 22 electrically connects the active substance-coated part 21 and the first post terminal 12.

The first post terminal 12 includes a first post terminal part 121 and a second post terminal part 122 that are separately formed, the second post terminal part 122 has a hardness greater than that of the first post terminal part 121, at least a part of the first post terminal part 121 is stopped outside the housing 11, and at least a part of the second post terminal part 122 is stopped inside the housing 11. The second post terminal part 122 includes a first connecting part 1222 and a second connecting part 1224, the second connecting part 1224 is provided in the mounting hole 111 in a penetrating manner, and the second connecting part 1224 is formed in an annular structure disposed around an inner wall of the mounting hole 111. The first connecting part 1222 is disposed in an annular region of the second connecting part 1224 and is connected to an inner end part of the second connecting part 1224 proximal to the active substance-coated part 21, a cavity 123 open in a direction away from the active substance-coated part 21 is defined between the second connecting part 1224 and the first connecting part 1222, a perforation 12221 is formed on the first connecting part 1222, and the conductive part 22 partially passes through the perforation 12221 and is received in the cavity 123 and is connected to the first connecting part 1222.

The first post terminal part 121 is located outside the housing 11 and is an annular structure, an end of the second connecting part 1224 distal to the active substance-coated part 21 is an outer end part 12241, the outer end part 12241 extends to a side of the inner peripheral part 12111 proximal to the central axis of the mounting hole 111, and an inner side surface S12 of the inner peripheral part 12111 facing the central axis of the mounting hole 111 is welded to an outer side surface S22 of the outer end part 12241 distal to the central axis of the mounting hole 111.

The housing assembly 1 further includes a post terminal cover plate 13 lidding the first post terminal part 121 and an insulating seal assembly 16 connecting the housing 11 and the first post terminal 12 in an insulating manner, where a clearance groove 131 is formed on the post terminal cover plate 13, the clearance groove 131 corresponds to a welding position of the outer end part 12241 and the inner peripheral part 12111 for accommodating a weld mark, the post terminal cover plate 13 includes an embedded part 132 extending to the annular region of the second connecting part 1224, a first gap 14 is provided between an outer peripheral surface 1321 of the embedded part 132 and an inner side surface S23 of the outer end part 12241, the insulating seal assembly 16 includes an insulating member 161 and an insulating sealing member 162 with stronger heat resistance than the insulating member 161, and the insulating sealing member 162 is located between a welding position of the first post terminal part 121 and the second post terminal part 122 and the housing 11.

In the above technical solution, since the first connecting part 1222 and the cavity 123 are liable to deformation due to the difficulty in obtaining reliable support from the housing 11, in the present application, the first post terminal 12 is arranged to include the first post terminal part 121 and the second post terminal part 122 that are separately formed, and the hardness of the second post terminal part 122 is set to be greater than that of the first post terminal part 121, such that the deformation of the first connecting part 1222 can be reduced to a certain extent, the connection reliability between the first connecting part 1222 and the conductive part 22 can be improved, and the conductive yield can be improved. Besides, the first post terminal part 121 of relatively low hardness is conducive to improving the welding yield of the first post terminal part 121 and the post terminal cover plate 13.

According to some embodiments of the present application, the present application further provides a battery 100. The battery 100 includes the battery cell 10 according to any one of the above embodiments.

In the above technical solution, since the battery 100 is provided with the above battery cell 10, and since the design of the battery cell 10 is diversified, the design diversity of the battery 100 can be improved.

According to some embodiments of the present application, the present application further provides an electric device 1000. The electric device 1000 includes the battery 100 according to the above embodiments, and the battery 100 is configured to provide electric energy for the electric device 1000.

In the above technical solution, since the electric device 1000 is provided with the above battery 100, and since the battery 100 can have diversified designs, different batteries 100 can be flexibly designed according to the actual requirements of the electric device 1000, and the power supply requirements for the electric device 1000 can be optimized.

It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing assembly comprising a housing and a first post terminal, wherein the housing is provided with a mounting hole, and the first post terminal is provided in the mounting hole in a penetrating manner; and
a battery cell assembly comprising an active substance-coated part and a conductive part, wherein the active substance-coated part is disposed in the housing, and the conductive part electrically connects the active substance-coated part and the first post terminal, and
wherein the first post terminal comprises a first post terminal part and a second post terminal part that are separately formed and connected to each other, at least a part of the first post terminal part is stopped outside the housing, at least a part of the second post terminal part is stopped inside the housing, and the second post terminal part is connected to the conductive part.

2. The battery cell according to claim 1, wherein the second post terminal part comprises a first connecting part, the first post terminal has a cavity formed on a side of the first connecting part distal to and/or facing the active substance-coated part, at least a part of the conductive part is received in the cavity and connected to the first connecting part, and at least the first connecting part in the second post terminal part has a hardness greater than that of the first post terminal part.

3. The battery cell according to claim 2, wherein the second post terminal part further comprises a second connecting part provided in the mounting hole in a penetrating manner, the second connecting part is formed in an annular structure disposed around an inner wall of the mounting hole, the first connecting part is disposed in an annular region of the second connecting part and connected to an inner end part of the second connecting part proximal to the active substance-coated part, the second connecting part and the first connecting part jointly define the cavity in an enclosing manner, the cavity is open in a direction away from the active substance-coated part, a perforation that is in communication with the cavity is formed on the first connecting part, and the conductive part partially passes through the perforation and is received in the cavity.

4. The battery cell according to claim 3, wherein the perforation is formed at an edge position of the first connecting part that is connected to the second connecting part.

5. The battery cell according to claim 3 or 4, wherein the active substance-coated part comprises a current collector and an active substance layer disposed on the current collector, the conductive part comprises a tab part electrically connected to the current collector, the tab part comprises a plurality of tab plates, parts of the plurality of tab plates proximal to the current collector converge to form a first gathering part, parts of the plurality of tab plates distal to the current collector converge and are connected to form a second gathering part, and the first gathering part connects the second gathering part and the active substance-coated part, and
wherein the conductive part is formed by the tab part, at least a part of the second gathering part passes through the perforation and is received in the cavity; or the conductive part comprises the tab part and an adapting piece, at least a part of the adapting piece passes through the perforation and is received in the cavity, and the adapting piece is connected between the second gathering part and the first connecting part.

6. The battery cell according to any one of claims 1-5, wherein the first post terminal part is located outside the housing and is an annular structure, the second post terminal part comprises a second connecting part provided in the mounting hole in a penetrating manner, the second connecting part is formed in an annular structure disposed around the inner wall of the mounting hole, and an end of the second connecting part distal to the active substance-coated part extends to be connected to an inner peripheral part of the first post terminal part.

7. The battery cell according to claim 6, wherein an end part of the second connecting part distal to the active substance-coated part is an outer end part, the outer end part extends to a side of the inner peripheral part proximal to a central axis of the mounting hole, and an inner side surface of the inner peripheral part facing the central axis of the mounting hole is welded to an outer side surface of the outer end part distal to the central axis of the mounting hole.

8. The battery cell according to claim 7, wherein the housing assembly further comprises a post terminal cover plate located outside the housing and lidding the first post terminal part, a clearance groove is formed on the post terminal cover plate, and the clearance groove corresponds to a welding position of the outer end part and the inner peripheral part for accommodating a weld mark.

9. The battery cell according to claim 8, wherein the post terminal cover plate comprises an embedded part extending to the annular region of the second connecting part, and an outer peripheral surface of the embedded part is spaced apart from an inner side surface of the outer end part to form a first gap.

10. The battery cell according to claim 6, wherein an end part of the second connecting part distal to the active substance-coated part is an outer end part, the inner peripheral part abuts against a side of the outer end part distal to the active substance-coated part, and an inner end surface of the inner peripheral part facing the active substance-coated part is welded to an outer end surface of the outer end part distal to the active substance-coated part.

11. The battery cell according to claim 10, wherein the housing assembly further comprises a post terminal cover plate located outside the housing and lidding the first post terminal part, the post terminal cover plate is partially embedded in an annular region of the inner peripheral part, and the post terminal cover plate is spaced apart from the inner peripheral part to form a second gap.

12. The battery cell according to any one of claims 1-11, wherein the first post terminal part is connected to the second post terminal part by welding.

13. The battery cell according to claim 12, wherein the first post terminal is provided with a recess at a welding position of the first post terminal part and the second post terminal part, and the recess is configured to accommodate a weld mark formed by welding the first post terminal part and the second post terminal part.

14. The battery cell according to claim 12 or 13, wherein the housing assembly further comprises an insulating seal assembly, the insulating seal assembly connects the housing and the first post terminal in an insulating manner, the insulating seal assembly comprises an insulating member and an insulating sealing member with stronger heat resistance than the insulating member, and the insulating sealing member is located between the welding position of the first post terminal part and the second post terminal part and the housing.

15. The battery cell according to claim 14, wherein the welding position of the first post terminal part and the second post terminal part is located at an outer side of the mounting hole, the insulating member comprises an outer insulating member and an inner insulating member, the outer insulating member is sandwiched between the first post terminal part and an outer wall of the housing, the inner insulating member is sandwiched between the second post terminal part and an inner wall of the housing, the insulating sealing member comprises an inner segment and an outer segment, the inner segment extends inside the mounting hole and abuts against the first post terminal part and the inner insulating member separately at two ends in an axial direction of the mounting hole, and the outer segment extends at the outer side of the mounting hole and is connected to the inner segment at a radial inner end and abuts against the outer insulating member at a radial outer end in a radial direction of the mounting hole.

16. The battery cell according to any one of claims 1-15, wherein the housing is provided with a plurality of post terminals, and at least one of the plurality of post terminals is the first post terminal.

17. A battery, comprising the battery cell according to any one of claims 1-16.

18. An electric device, comprising the battery according to claim 17.
